# EUROPEAN PATENT SPECIFICATION

(11) **EP 0 473 440 B1**
(45) Date of publication and mention of the grant of the patent: **12.02.1997**
(21) Application number: 91307934.9
(22) Date of filing: 29.08.1991
(51) Int. Cl.: G02F 1/035

(54) **An optical wave-length filter and a driving method thereof**
Optisches Wellenlängenfilter und dessen Steuerverfahren
Filtre optique de longueur d'onde et son procédé de commande

(30) Priority: 30.08.1990 JP 228858/90
(43) Date of publication of application: 04.03.1992
(73) Proprietor: Oki Electric Industry Co., Ltd., Tokyo (JP)
(72) Inventor: Okayama, Hideaki, c/o OKI Electric Industry Co.Ltd, Minato-ku, Tokyo (JP); Yaegashi, Hiroki, c/o OKI Electric Industry Co.Ltd, Minato-ku, Tokyo (JP); Ishida, Toshimasa, c/o OKI Electric Ind. Co., Ltd, Minato-ku, Tokyo (JP)
(74) Representative: Read, Matthew Charles

(56) References cited:
- EP-A- 0 260 595
- US-A- 4 327 971
- ELECTRONICS LETTERS. vol. 23, no. 11, 21 May 1987, STEVENAGE GB pages 572 - 574; F.HEISMANN ET AL.: 'Electro-optically tunable, narrowband Ti:LiNbO3 wavelength filter'
- OPTICAL COMMUNICATION CONFERENCE 17 September 1979, AMSTERDAM, NL pages 1521 - 1524; M.IZUTZU ET AL.:'An Electrooptic TE-TM Mode Converter Using Composite Periodic Structure'

## Description

The present invention relates to an optical wavelength selection filter which comprises a waveguide formed on a substrate; an input polarizer at an input to the waveguide, having a first polarization planer an output polarizer at an output of the waveguide, having a second different polarization plane; and a mode converter disposed along the waveguide between the polarizers for converting radiation from a first mode polarized in said first plane to a second mode polarized in said second plane, the mode converter comprising a multi-fingered reference electrode means interdigitated with a plurality of finger-like control electrode means. The present invention also relates to a method of tuning an optical wavelength selection filter.

A known optical wavelength selection filter is disclosed in "Heisemann, F. et al., Electronics Letters, 23 (1987), 21st May, No. 11". However, the tuning range of the disclosed filter is only 8nm which is insufficient for practical application.

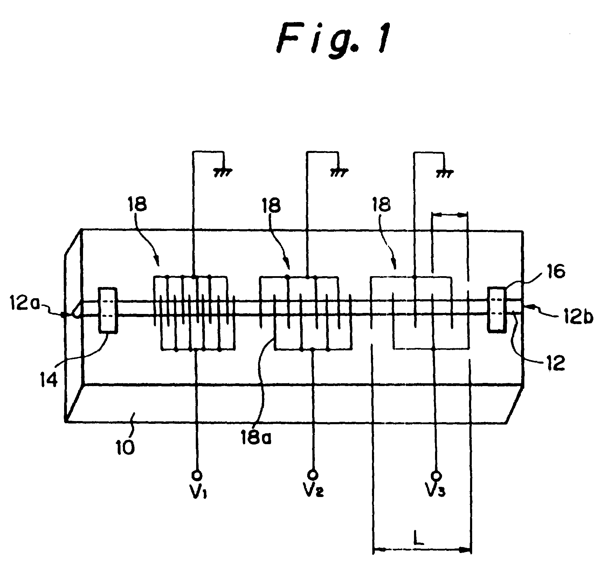

Another filter structure is illustrated in Fig. 1. This structure has been proposed in order to provide an improvement in tuning range for optical filters.

The optical wavelength filter illustrated in the Fig. 1 comprises a waveguide path 12 formed in a substrate 10, polarizers 14 and 16 disposed respectively at an input port 12a and an output port 12b of the waveguide path 12, and three mode converters 18 disposed between the polarizers 14,16.

In this filter, a waveguide type polarizer 14 transmits TE mode light, a waveguide type polarizer 16 transmits TM mode light, and the mode converters 18 convert TE mode light having a predetermined wavelength into TM mode light.

As a result, light having a predetermined wavelength can be selected from polychromatic light.

The mode converters 18 are configured such that the centre wavelengths λₒ of their bandwidths differ by Δλ_{T}(max) from that of the adjacent mode converter(s) 18, where Δλ_{T}(max) is the maximum tuning deviation of each mode converter 18.

Each mode converter 18 is constituted by a pair of interdigitated multi-fingered electrodes. The multi-fingered electrodes 18a are located at predetermined locations along the waveguide path 12.

The periods of the multi-finger electrodes 18a of each mode converter 18 differ from converter to converter. Consequently, the centre wavelengths λₒ of the mode converters differ from each other.

When a voltage V1 is applied to the multi-finger electrodes 18a, in a similar manner to that used in a conventional filter, optical mode conversion can be performed on a predetermined wavelength.

The band width Δλ_{W} of the of a mode converter can be described as;${\text{Δλ}}_{\text{W}} \text{/λ = Λ/L}$ wherein λ is a wavelength transmitted through the optical wavelength filter, and L is the distance (length of mode converter) between the first finger-type electrode 18a and the last finger-type electrode 18a of mode converter 18.

Accordingly, in order to narrow the band width Δλ_{w} for improving filter characteristics, the length L of the mode converter must be increased.

The conventional filter, however, necessitates a plurality of mode converters 18 being coupled in series to select light having a predetermined wavelength.

As the result, there is the problem that the total length of the optical wavelength filter is required to be, at least, nL.

A device related to that shown in Fig 1 is disclosed in US-A-4327971.

"Izutsu, M et al, Optical Communications Conference; Amsterdam, 17-19 September 1979, pp 15.2-1 to 15.2-4" teaches that the conversion efficiency of a mode converter, as employed in the present invention, may be improved by applying a spatially, periodically varying control voltage to a split control electrode.

It is aim of the present invention to provide a tunable optical filter having a practically useful tuning range without incurring the size penalty of the device of Fig. 1.

According to the present invention, an optical wavelength selection filter includes controllable voltage generator means for applying a voltage pattern to the control electrode means, wherein the voltage pattern is or approximates a spatial sine wave and the voltage generator means is controllable to vary the period of said sine wave.

Preferred features of a filter according to the present invention are set out in claims 2 to 6.

The present invention also provides a method of tuning an optical wavelength selection filter which comprises a waveguide formed on a substrate; an input polarizer at an input to the waveguide, having a first polarization plane; an output polarizer at an output of the waveguide, having a second different polarization plane; and a mode converter disposed along the waveguide between the polarizers for converting radiation from a first mode polarized in said first plane to a second mode polarized in said second plane, the converter comprising a multi-fingered reference electrode means interdigitated with a plurality of finger-type control electrode means. A method according to the present invention comprises the steps of:
(a) applying a first voltage pattern, which is or approximates a spatial sine wave having a first period, to the control electrode means, and
(b) replacing the first voltage pattern with a second voltage pattern, which is or approximates a spatial sine wave having a second period, to the control electrode means, to thereby retune the filter.

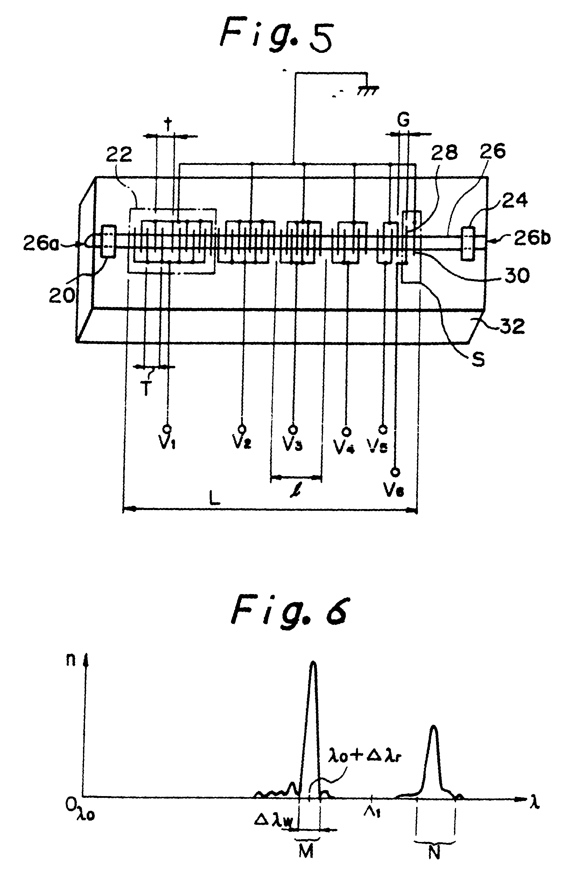

Embodiments of the present invention will now be described, by way of example, with reference to Figs. 2 to 10 of the accompanying drawings, in which:
Fig. 1 is a perspective view illustrating one example of a conventional multi-stage optical wavelength filter;
Figs. 2 (A) and (B) are explanatory views illustrating a first embodiment of the present invention;
Figs. 3 (A) and (B) are explanatory views illustrating the operation of the first embodiment of the present invention;
Fig. 4 is a wave form chart illustrating a smoothly alternating electric field distribution;
Fig. 5 is a perspective view schematically illustrating a second embodiment of the present invention;
Fig. 6 is an explanatory view of noise light;
Figs. 7 (A) ~ (C) are explanatory views illustrating a third embodiment of the present invention;
Figs. 8 (A) and (B) are explanatory views illustrating a fourth embodiment of the present invention;
Figs. 9 (A) and (B) are wave form charts illustrating a voltage distribution and a transmitted wavelength band width M corresponding to the voltage distribution; and
Figs. 10 (A) and (B) are wave form charts illustrating a voltage distribution and a transmitted wavelength bandwidth M corresponding to the voltage distribution.

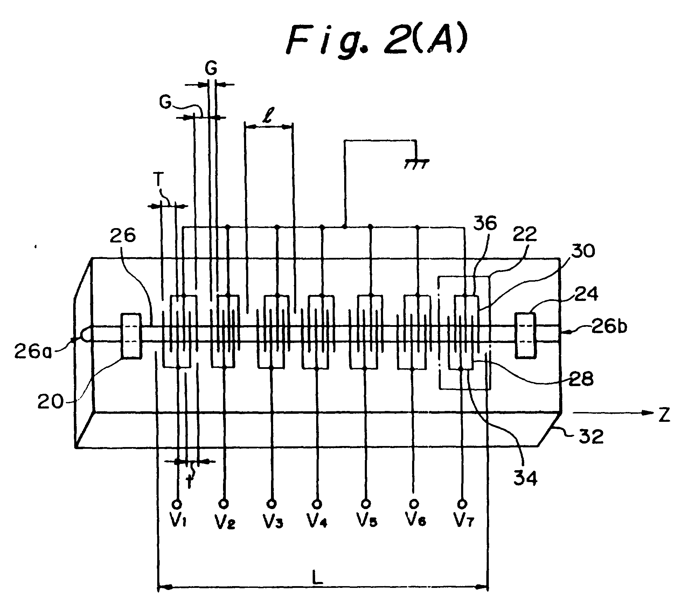

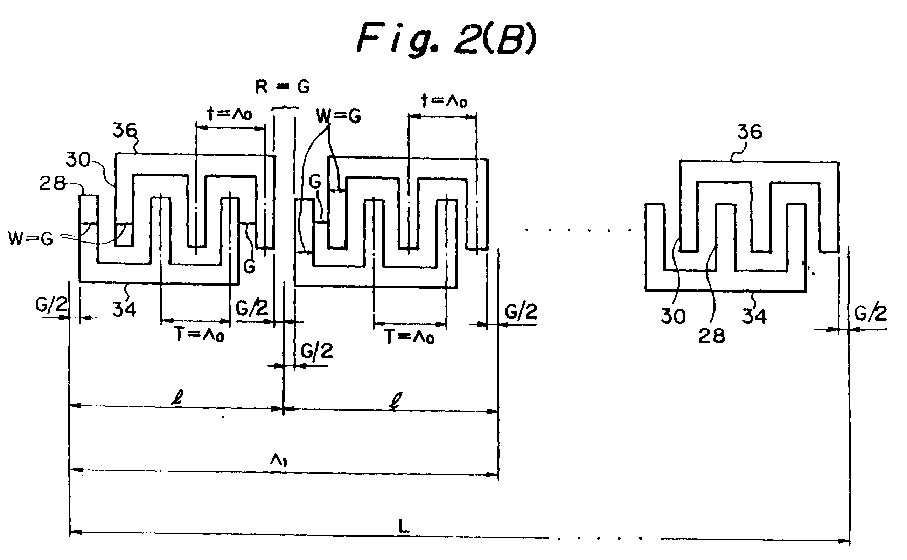

Referring to Figs. 2(A) and 2(B), an optical wavelength filter, according to the present invention, employs a front stage polarizer 20 for transmitting input TM light, a plurality of mode converter sections 22 for converting the input TM light, having a wavelength for which they are active, into TM light, and a rear stage polarizer 24 for transmitting the TE light from the mode converter sections 22 for output. The polarizers 20,24 and the mode converter sections 22 are formed along a waveguide path 26.

The mode converter sections 22 each comprise finger-type control electrodes 28 and finger-type earthing electrodes 30. The control and earthing electrodes 28,30 are interdigitated with each other and extend transversely across the waveguide path 26.

In this embodiment, the waveguide path 26 is in the form of straight line and is formed by diffusing Ti in a X-cut LiNbO₃ substrate 32.

The front stage polarizer 20 is disposed at the input port 26a of the waveguide path 26 and the rear stage polarizer 24 is disposed at the output port 26b. The polarizers 20,24 are waveguide types.

The finger-type electrodes 28,30 within each mode converter section 22 are coupled by common conductors 34,38 to form comb-shaped control and earthing electrode structures.

The period T of the control electrodes 28 and the period t of the earthing electrodes 30 are equal to a period Λₒ (T = t = Λₒ) which is common to all of the mode converter sections 22.

All of the electrodes 28 and 30 disposed between the front and the rear stage polarizers 20 and 24 are disposed with an equal interval G.

The lengths 1 of the mode converter sections 22 are the same.

The length 1 is defined as a distance between a position G/2 in the direction toward the front stage polarizer 20 from the first electrode of a mode converter section 22 and a position G/2 in the direction toward the rear stage polarizer 24 from the last electrode of the mode converter section 22.

The letter L, shown in Figs. 2 (A) and 2 (B), represents the overall length of the mode-conversion portion of an optical wavelength filter.

Accordingly, if there are r mode converter sections 22 between the polarizers 20,24, the total length L = r·l.

The total length L corresponds to the length of a single mode converter 18 employed in the optical wavelength filter shown in Fig. 1.

The "period" of the distribution of the mode converter sections 22 is Λ₁ which equals 2.l.

The letter W represents the width of an electrode and in this embodiment all the finger-type electrodes 28,30 have the same width.

It is preferable to set the electrode width W to be equal to the electrode gap G (W = G).

Each of parameters, set forth above, T, t, G, l, L, Λ₁ and W is defined as a distance along the waveguide path 26.

The control voltages applied to the control electrodes 28 are such that the electric field distribution in the waveguide path 26 approximates the product of two sine waves.

To simplify the voltage control for the control electrodes 28, the same voltage Vm is applied to every electrode 28 belonging to the same mode converter section 22, where m is the mode converter index, the mode converter section nearest the input port having the index 1, the next the index 2 and so on.

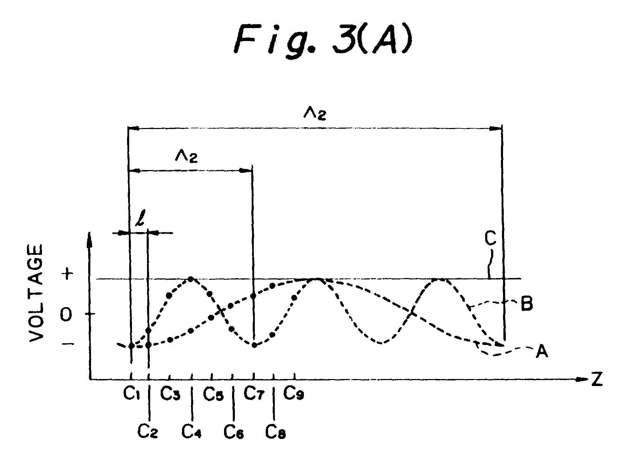

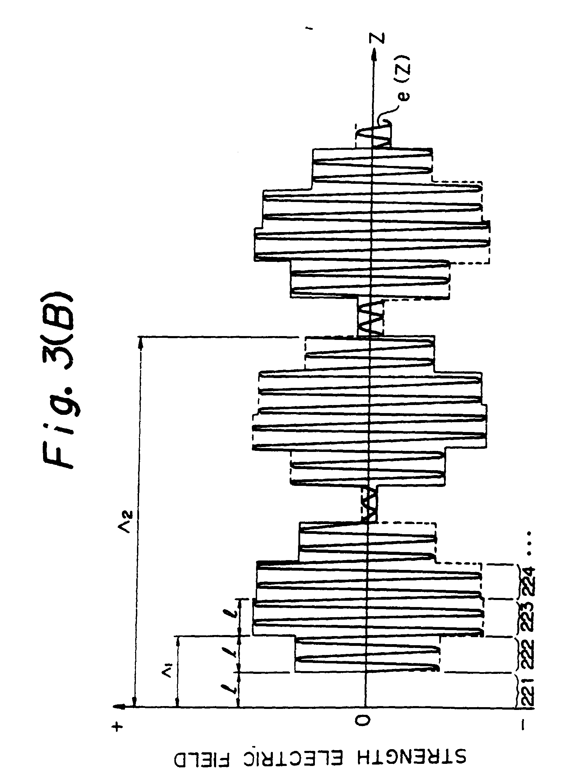

Fig. 3 (A) shows a distribution of the voltage Vm in which the vertical axis represents voltage V and the horizontal axis represents a position z in a direction along the waveguide path 26.

In the drawing, the letter Cm, representing the position of the m-th mode converter section 22 along the waveguide path 26, can mean either the starting, the ending or the centre position.

An appropriate position C1 is chosen on the z-axis and positions C2, C3, ..... are sequentially set from the position C1 with an interval l.

The voltage Vm applied to the control electrode 28 which belongs to the m-th mode converter section 22, located at the position Cm, is plotted as a black circle in the drawing.

The voltage Vm is set for driving the optical wavelength filter such that the distribution of the voltage Vm approximates a sine wave form as illustrated as black circles on curves A or B in Figure 3 (A).

Preferably, the control voltage distribution is an accurate sine wave.

However, this is not essential and an approximation of a sine wave may be used.

The curves A and B are, for example, represented as V - sin z and the period of the curves A and B equals a period Λ₂ described later (refer to Fig. 3 (B)).

The voltage (= sin Cm) corresponding to the position Cm is, for example, represented by the voltage Vm.

Since the same voltage Vm is applied to all the control electrodes 28 of each mode converter section 22, the voltage distribution is a step-wise approximation to a sine wave.

The curve A represents a distribution of the voltage Vm in the case of Λ₁ < Λ₂ < ∞, whereas the curve B represents in the case of Λ₂ = Λ₁.

By way of the voltage Vm being applied to the control electrodes 28 of the m-th mode converter section 22 and the earthing electrodes 30 of all the mode converter sections 22 being grounded to preserve the same potential, an approximately sine-wave distribution of electric field e(z) can be achieved in a direction along the waveguide path 26.

The distribution of electric field e(z) achieved above is shown in Fig. 3 (B).

In Fig. 3 (B), the vertical axis represents strength of electric field generated in the waveguide path 26 in the direction of the thickness of a substrate and the horizontal axis represents the distance z along the waveguide path 26.

As shown in Fig. 3 (B), the distribution of electric field e(z) is a step-wise approximation to the product of two sine waves.

Although the distribution of electric field e(z) varies step-wise as described above, the distribution of electric field e(z) can be analogously considered to be a smoothly varying distribution of electric field E(z) when the length 1 of the mode converter section 22 is extremely small.

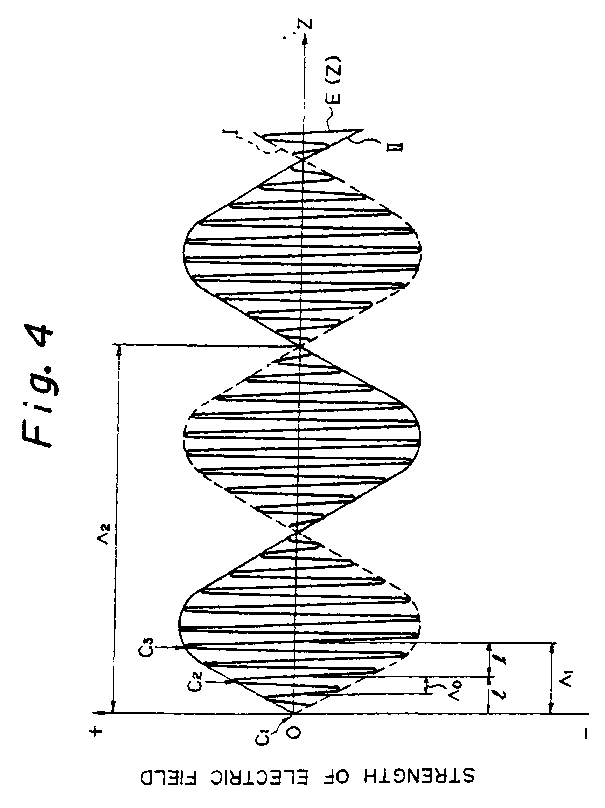

Fig. 4 shows the smoothly varying distribution of electric field E(z) and envelopes I and II thereof, in which the vertical axis represents strength of electric field in the waveguide path 26 in the direction of the thickness of the substrate and the horizontal axis represents the distance z along the waveguide path 26.

The smoothly varying distribution of electric field E(z) is described in general as follows:${\text{E(z) = (e}}^{\text{iφz}} {\text{± e}}^{\text{-iφz}} {\text{) · (e}}^{\text{i·Δφz}} {\text{± e}}^{\text{-iΔφz}} \text{) (A)}$ wherein
φ = 2·π/Λ₀
Δφ = 2·π/Λ₂
Λ₂: period of envelope (refer to Fig. 3 (A))

The second term (e^{i.Δφ.z} ± e^{-i.Δφ.z}) of the equation A represents the "modulation" of the distribution E(z); the "carrier" wave form of which approximates a sine-wave.

The coupling equations of an optical wavelength filter in this case can be described as follows:$\frac{\text{da}}{\text{dz}} \text{=} \text{i} \text{·} \text{K} \left(\text{z}\right) \text{·} {\text{e}}^{\text{i} \text{·Δβ} \text{z}} \text{·} \text{b} \text{(B)}$$\frac{\text{db}}{\text{dz}} \text{=} \text{i} \text{·} \text{K} \text{*} \left(\text{z}\right) \text{·} {\text{e}}^{\text{i} \text{·Δβ} \text{z}} \text{·} \text{a} \text{(C)}$ , wherein:$\text{Δβ =} \frac{\text{2} \text{·π} \text{z}}{\text{λ}} \text{·Δ} \text{n}$
- a:: amplitude in TM mode
- b:: amplitude in TE mode
- K(z):: coupling coefficient between the TM mode and the TE mode
- K*(z):: complex conjugate of K(z)
- λ:: wavelength of light
- Δn:: difference of refractive index between TM mode and TE mode.
Now, K(z) is described as follows:${\text{K(z) = K}}_{\text{0}} \text{.E(z)} {\text{= K}}_{\text{0}} {\text{.(e}}^{\text{i.(φ+Δφ).z}} {\text{± e}}^{\text{-i.(φ+Δφ).z}} {\text{) + (e}}^{\text{i.(φ+Δφ).z}} {\text{± e}}^{\text{-i.(φ-Δφ).z}}$ , wherein${\text{K}}_{\text{0}} \text{∝} \frac{\text{Γ} \text{'} \text{·π}}{\text{λ}} \text{·} {\text{n}}_{\text{0}}^{\text{3}} {\text{·γ}}_{\text{51}} \text{·} \frac{\text{V}}{\text{G}}$
- Γ:: effective coefficient
- n₀:: refractive index for normal light
- γ₅₁:: electro-optical coefficient of the substrate
- V:: voltage applied to the control electrode
- G:: electrode gap

It is well known that at the wavelength λ, where the exponential term of K(z).e^{i.Δβ.z} according to the equation (B) becomes zero notwithstanding the value of z, the coupling between TM and TE modes becomes effective to cause an inter-mode coupling.

When Δβ < 0, the condition under which the phase term becomes zero notwithstanding the value of z is: Δβ = φ + Δφ or Δβ = φ - Δφ.

The optical wavelength satisfying the equation Δβ = φ ± Δβ is described as follows:$\frac{\text{Δ} \text{n}}{\text{λ}} \text{=} \frac{\text{1}}{{\text{Λ}}_{\text{0}}} \text{±} \frac{\text{1}}{{\text{Λ}}_{\text{2}}} \text{(E)}$

Light having the wavelength λ complying with the equation (E) is mode-converted and transmitted through the optical wavelength filter.

Δn and Λ₀ are predetermined structural design parameters and the optical wavelength λ transmitting through the optical wavelength filter can be varied by varying the period Λ₂ of the voltage Vm.

As readily understood in the equation (E), there are two kinds of the optical wavelength λ transmitting through the optical wavelength filter.

The wavelength λ can be written as λ = λ₀ + Δλ_{T}, wherein λ₀ is a standard design wavelength, and Δλ_{T} is a deviation from the standard design wavelength λ₀. Assuming Δλ_{T} 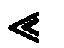 λ₀(Λ₀ 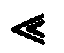 Λ₂), in order to calculate the bandwidth of the filter, the following equation (F) is achieved from the equation (E):$\frac{\text{Δ} \text{n}}{{\text{λ}}_{\text{0}}} \text{·(} \text{1 -} \frac{{\text{Δλ}}_{\text{T}}}{{\text{λ}}_{\text{0}}} \text{)} \text{=} \frac{\text{1}}{{\text{Λ}}_{\text{0}}} \text{±} \frac{\text{1}}{{\text{Λ}}_{\text{2}}} \text{(F)}$

The following equation (G) is achieved by modification of the equation (F):$\frac{{\text{Δλ}}_{\text{T}}}{{\text{λ}}_{\text{0}}} \text{= ±} \frac{{\text{Λ}}_{\text{0}}}{{\text{Λ}}_{\text{2}}} \text{(G)}$

The equation (G) clearly teaches that the optical wavelength filter can transmit light having the two wavelengths λ₀ + Δλ_{T} and λ₀ - Δλ_{T}.

As readily understood from the analysis based upon the coupling equations as described above, when the smoothly varying distribution of electric field E(z) is generated, an optical wavelength filter can be achieved which is transmit light having two wavelengths λ₀ + Δλ_{T} and λ₀ - Δλ_{T}.

By the way, when a distribution of electric field e(z) varying stepwise is generated, the coupling coefficient K(z) is described as follows:${\text{K(z) = K}}_{\text{0}} {\text{· (e}}^{\text{iφz}} {\text{·e}}^{\text{-iφz}} {\text{) · ∫F(k)·e}}^{\text{ikz}} \text{dk (H)}$ , wherein$\overline{\text{F}} \left(\text{k}\right) \text{={} \text{e} {\text{}}^{\text{i} \text{(} \frac{\text{2} \text{π}}{{\text{Λ}}_{\text{2}}} \text{-} \text{k} \text{)·} \frac{\text{L}}{\text{2}}} \text{·} \frac{\text{sin} \text{[} \text{N} \text{·(} \frac{\text{2} \text{·π}}{{\text{Λ}}_{\text{2}}} \text{-} \text{k} \text{)·} \frac{\text{l}}{\text{2}} \text{]}}{\text{sin} \text{[(} \frac{\text{2} \text{·π}}{{\text{Λ}}_{\text{2}}} \text{-} \text{k} \text{)·} \frac{\text{l}}{\text{2}} \text{]}} \text{+} \text{e} {\text{}}^{\text{-} \text{i} \text{(} \frac{\text{2} \text{π}}{{\text{Λ}}_{\text{2}}} \text{+k} \text{)·} \frac{\text{L}}{\text{2}}} \text{·} \frac{\text{sin} \text{[} \text{-N} \text{·(} \frac{\text{2} \text{·π}}{{\text{Λ}}_{\text{2}}} \text{+k} \text{)·} \frac{\text{l}}{\text{2}} \text{]}}{\text{sin} \text{[} \text{-} \text{(} \frac{\text{2} \text{·π}}{{\text{Λ}}_{\text{2}}} \text{+k} \text{)·} \frac{\text{l}}{\text{2}} \text{]}} \text{}} \text{·} \frac{\text{k}}{\text{2}} \text{·} \text{sin} \text{(} \frac{\text{k} \text{·} \text{l}}{\text{2}} \text{)·} \frac{\frac{\text{2} \text{·π}}{{\text{Λ}}_{\text{2}}}}{\text{2} \text{·} \text{N} \text{·} \text{sin} \text{(} \frac{\text{2} \text{·π}}{{\text{Λ}}_{\text{2}}} \text{·} \frac{\text{l}}{\text{2}} \text{)}}$ N = L/l.
$\overline{\text{F}}$(k) in the equation (H) has a peak value at the of k where either$\text{Sin} \text{[(} \frac{\text{2} \text{·π}}{{\text{Λ}}_{\text{2}}} \text{-} \text{k} \text{)·} \frac{\text{l}}{\text{2}} \text{]} \text{or Sin} \text{[-(} \frac{\text{2} \text{·π}}{{\text{Λ}}_{\text{2}}} \text{+} \text{k} \text{) ·} \frac{\text{l}}{\text{2}} \text{]}$ becomes zero, that is,$\text{k} \text{= ±} \frac{\text{2} \text{·π}}{{\text{Λ}}_{\text{2}}} \text{+} \frac{\text{2j}}{\text{l}} \text{· π = ±} \frac{\text{2} \text{·π}}{{\text{Λ}}_{\text{2}}} \text{+} \frac{\text{2} \text{·π}}{{\text{Λ}}_{\text{1}}} \text{·} \text{2} \text{·} \text{j}$ (j= 0, 1, 2, 3, ..... ) and at the other value of k, $\overline{\text{F}}$(k) = 0.

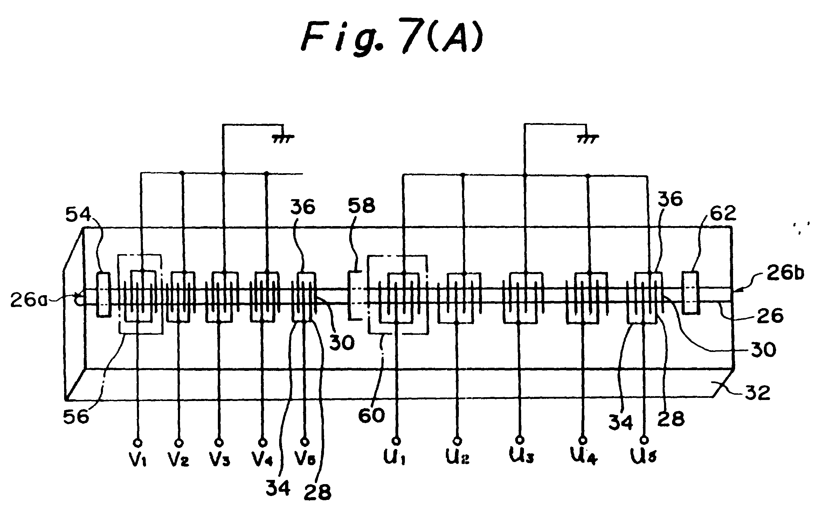

When j - 0, there arises a main peak of the light having the conversion wavelength corresponding to the band region M described later in Fig. 6 and when j ≠ 0, there arises a peak of the noise light corresponding to the band region N in Fig. 6.

Around the peak,$\text{k} \text{→ ±} \frac{\text{2} \text{·π}}{{\text{Λ}}_{\text{2}}} \text{+} \frac{\text{2j}}{\text{l}} \text{· π} \text{+} \text{δ.}$

Accordingly, varying number of integral can be changed from dk to dδ.

Assuming that fⱼ(z) is an integral by dδ at each of the peak positions, K(z) is approximately described as follows:

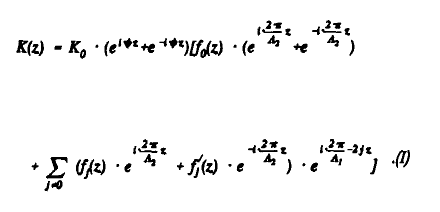

In the equation (I), the term f₀(z) corresponds to the main peak of the light with a converted wavelength and equals the equation (D).

The term fⱼ(z) in case of j ≠ 0 corresponds to the peak of the noise light.

In connection with the step-wise varying distribution of electric field e(z), above mentioned equations (E), (F) and (G) can not only be achieved but also the following (1) ∼ (3).
(1): When Λ₂ = Λ₁ that is the repetition number of the period Λ₂ becomes maximum, the maximum value Δλ_{T}(max) of the deviation value Δλ_{T} can be obtained, wherein the maximum value Δλ_{T} (max) can be described as:$\frac{{\text{Δλ}}_{\text{T}} \left(\text{max}\right)}{{\text{λ}}_{\text{0}}} \text{=} \frac{{\text{Λ}}_{\text{0}}}{{\text{Λ}}_{\text{1}}}$
(2): When the phase term equals to zero, since it does not differ from the case where Λ₂ = ∞ (uniform mode-conversion, Δλ_{T} = 0), the band width Δλ_{W} in this embodiment where the optical wavelength filter transmits light having two wavelengths λ0 + Δλ_{T} can be expressed as$\frac{{\text{Δλ}}_{\text{W}}}{{\text{λ}}_{\text{0}}} \text{=} \frac{{\text{Λ}}_{\text{0}}}{{\text{Λ}}_{\text{L}}}$

Accordingly, the band width Δλ_{W} of the embodiment equals that shown in Fig. 1, assuming the lengths L of both elements are equal.

The operational voltage of the optical wavelength filter according to the embodiment is approximately 1.5 times larger than that of the optical wavelength filter shown in Fig. 1.

The channel number CH according to the embodiment is defined as CH = Δλ_{T}(max) / Δλ_{W} = L / Λ₁ = periodic number N.

When the total number of the mode converter sections 22 is represented as Nmax which are disposed between the polarizers 20,24, N can be described as N = Nmax / 2.

When the band width Δλ_{W} and the channel number CH are respectively equal to each other in the embodiment and in Fig. 1, the total length of the optical wavelength filter shown in Fig. 1 needs to be n-times larger than that of the embodiment.

(3): When the standard design wavelength λ₀ is set as λ₀ = 1.3 µm and a Ti-diffused waveguide route is formed in a LiNbO₃ substrate, the band width Δλ_{W} is described as Δλ_{W} ≃ = 1.3 nm due to Λ₀ ≃ 18 µm.

Accordingly, Λ₁ can be designed as Λ₁ ≃ 180 µm in order to achieve the channel number CH being CH = 100, wherein the maximum deviation value Δλ_{T}(max) is expressed as Δλ_{T}(max) = 130 nm.

A computer may be employed to control the voltages Vm applied to the mode converter sections 22.

Hereinafter, only features differing from those of the first embodiment will be explained.

A second embodiment of the invention is constituted such that the length 1 of the mode converter sections 22 becomes shorter (or longer) sequentially along a direction of arrangement.

The total numbers of the finger-type electrodes 28,30 employed in the mode converter sections 22 increase or decrease depending on the increase or decrease of the length L.

A mode converter section 22 may contain one or more control and earthing electrodes 28,30.

One mode converter section 22 constituted by a single finger-type electrode 28 for control and a single finger-type electrode 30 for earthing is shown in the drawing enclosed by the one-doted line indicated by the letter S.

Fig. 6 is an explanatory view of noise light, wherein the vertical axis represents conversion efficiency η of TM/TE mode conversion and the horizontal axis represents an optical wavelength λ.

Fig. 6 shows the conversion efficiency η between the TM and TE modes wavelength λ for a filter according to the first embodiment of the present invention.

As shown in the drawing, when an optical wavelength filter is driven, the mode-conversion of the light having a conversion wavelength (or an approximate conversion wavelength failing into the band width M having the band width Δλ_{w} from the central conversion wavelength) occurs and, in addition to that, the conversion efficiency η of the noise light (the light failing into the image wavelength band width N) is elevated to exceed -10dB at the peak value when the period Λ₂ approaches to the period Λ₁.

However, since the length l of the mode converter 22 of the second embodiment is set to be gradually shorter or longer sequentially, the conversion efficiency of the noise light can be reduced, whereby the peak value of the conversion efficiency of the noise light can be reduced to below -10dB even though the period Λ₂ approaches to the period Λ₁.

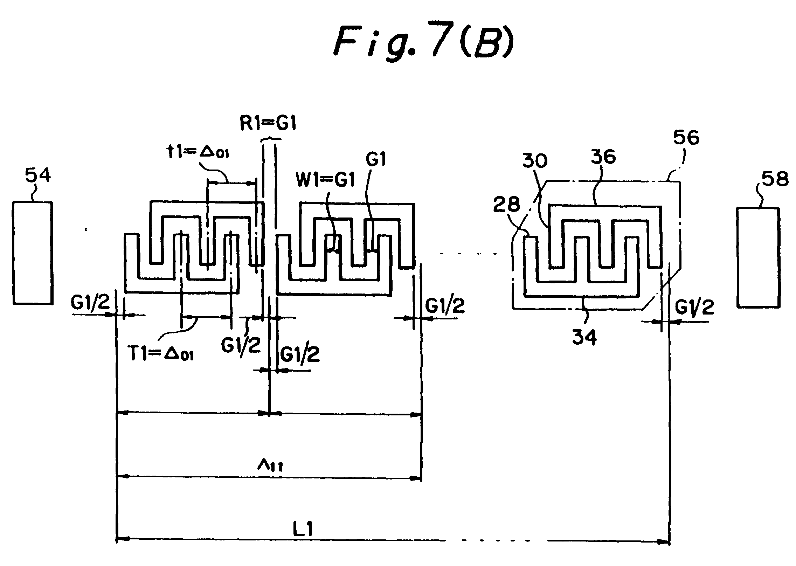

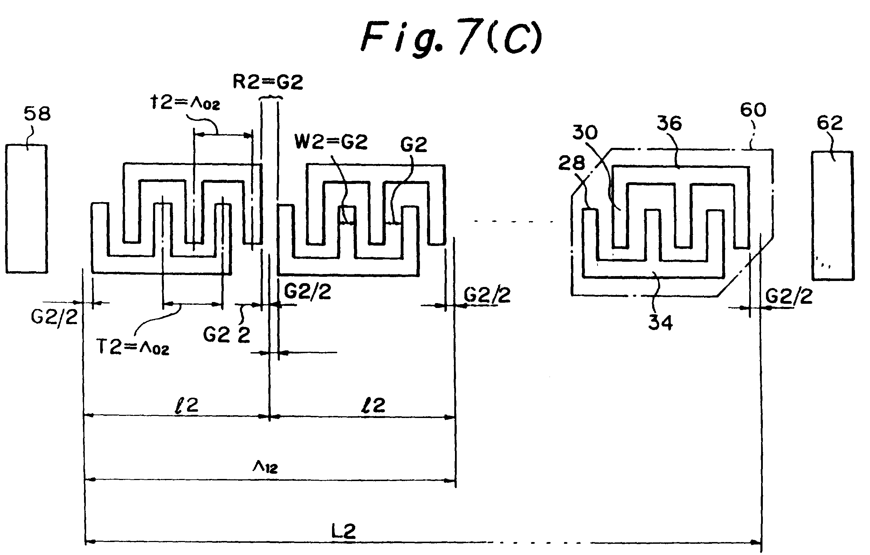

Figs. 7 (A) ∼ (C) are explanatory views of the embodiment according to the invention, wherein Fig. 7 (A) is a perspective view schematically illustrating the total construction of the third embodiment and Fig. 7 (B) is an enlarged plan view mainly illustrating the arrangement of the first mode converter, and Fig. 7 (C) is an enlarged plan view mainly illustrating the arrangement of a second mode converter.

The elements corresponding to those of the above described embodiments are shown with the same numerals and detailed explanation will be omitted.

An optical wavelength filter according to this embodiment employs, as shown in Fig. 7 (A), a front stage polarizer 54 for transmitting input TM mode light, a plurality of the first mode converter sections 56 for mode-converting input TM mode light, a middle stage polarizer 58 for transmitting the TE mode light from the first mode converter 56, a plurality of the second mode converter sections 60 for mode converting the TE mode light into TM mode light, and a rear stage polarizer 62 for transmitting the TM mode light from the second mode converter 60 as output light, all of which are disposed along the wave guide path 26.

The first and the second mode converter sections 56,60 are respectively constituted by a combination of interdigitally disposed finger-type electrodes 28 for control and finger-type electrodes 30 for earthing.

There are disposed, in the embodiment, a front stage polarizer 54 located adjacent the input port 26a of the wave guide path 26, a rear stage polarizer 62 located adjacent the output port 26b, and a middle stage polarizer 58 between these polarizers 54 and 62. The polarizers 54, 58 and 62 are wave guide-type polarizers.

The first element group I is formed such that a plurality of the first mode converter sections 56 are disposed between the front stage polarizer 54 and the middle stage polarizer 58.

The second group II is formed such that a plurality of the second mode converter sections 60 are disposed between the middle stage polarizer 58 and the rear stage polarizer 62.

The filter portion I, which has a similar construction to the first embodiment, is constituted by the front stage polarizer 54, the middle stage polarizer 58 and a plurality of the first mode converter sections 56 between both these polarizers.

The filter portion II, which has a similar construction to the first embodiment, is constituted by the middle stage polarizer 58, the rear stage polarizer 62 and a plurality of the second-mode converter sections 60 between these polarizers.

The filter portion I inputs the TM mode light from the input port 26a and converts the TM light having the conversion wavelength into TE mode light to be output.

The filter portion II converts the TE mode light having the conversion wavelength selectively among the input TE mode light from the filter portion I into TM mode light to be output from the output port 26b.

This embodiment, as shown in Figs. 7 (B) and 7 (C), is constituted such that the period T1 of the control electrodes 28 and the period t1 of the earthing electrodes 30 employed in the first mode converter sections 56 are respectively set to a common first period Λ₀₁ (T1 = t1 = Λ₀₁), and the period T2 of the control electrodes 28 and the period t2 of the earthing electrodes 30 employed in the second mode converter sections 60 are respectively set to a common second period Λ₀₂ (T2 = t2 = Λ₀₂).

These periods Λ₀₁ and Λ₀₂ differ each other (Λ₀₁ ≠ Λ₀₂).

The lengths l₁ of all the first mode converter sections 56 are set to be equal for each other and the lengths l₂ of all the second mode converter sections 60 are set to be equal to each other, wherein either l₁ = l₂ or l₁ ≠ l₂ is possible.

Further, all the finger-type electrodes 28,30 disposed between the front and the middle stage polarizers 54 and 58 are disposed with the first interval (the disposed interval (electrode gap) is shown in Fig. 7 (B) at G1.) and all the finger-type electrodes 28,30 disposed between the middle and the rear stage polarizers 58,62 are disposed with the second interval (the disposed interval (electrode gap) is shown in Fig. 7 (C) at G2.).

The letters L1 and L2 appearing in Figs. 7 (B) and 7 (C) represent the total lengths of the filter portions I and II, and Λ₁₁ and Λ₁₂ represent the distribution "period" of the first mode converter sections 56 and the second mode converter sections 60 in which Λ₁₁ = 2.l₁ and Λ₁₂ = 2.l₂, and Wl and W2 represent the electrode widths.

This embodiment is constituted such that the electrode widths of the finger-type electrodes 28,30 in all the first mode converters 56 are commonly set to the electrode width W1 and the electrode width of the finger-type electrodes 28,30 in all the second mode converters 60 are commonly set to the electrode width W2.

The electrode gap G1 is preferably set to be equal to the electrode width W1 and the electrode gap G2 equal to the electrode width W2 in the same way.

The voltage applied to each control electrode 28 is controlled such that the distribution of electric field e1(z) along the waveguide path 26 of the first mode converter sections 56 and the distribution of electric field e2(z) along the waveguide path 26 of the second mode converter sections 60 are both approximations of the product of two sine waves.

In addition, the distributions of electric fields e1(z) and e2(z) are arranged such that mode conversion takes place in both filter portions I, II for light having the same free space wavelength.

The distribution of electric field e1(z) is utilized for converting the TM mode light into the TE mode light in the filter portion I and the distribution of electric field e2(z) is utilized for converting the TE mode light into the TM mode light in the filter portion II.

Further, in the embodiment the first voltage Vn applied to the control electrodes 28 of the first mode converter sections 56 is controlled in order to mode-convert the TM mode light into TE mode light.

In addition to that, the second voltage Un applied to the finger-type electrodes 28 of each second mode converter sections 60 is controlled in order to mode-convert the TE mode light into TM mode light.

The distribution of electric field e1(z) and the first voltage Vn in the filter portion I and the distribution of electric field e2(z) and the second voltage Un in the filter portion II are controlled in the manner described with reference to the first embodiment.

The conversion wavelength of the first mode converter sections 56 in the filter portion I is given as λ₀₁ ± Δλ_{T1}, wherein Δλ_{T1} varies in response to the variation of the period Λ₂₂ of the second voltage Un.

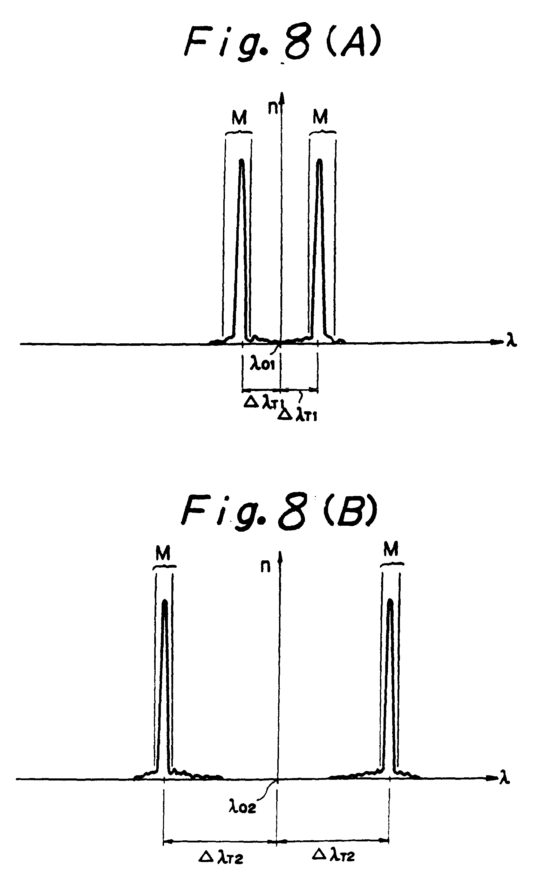

In Fig. 8 (A) the horizontal axis represents the optical wavelength λ mode-converted in the filter portion I and the vertical axis represents the conversion efficiency η, and, in Fig. 8 (B), the horizontal axis represents the optical wavelength λ mode-converted in the filter portion II and the vertical axis represents the conversion efficiency η.

When the first period Λ₀₁ equals to the second period Λ₀₂, that is, λ₀₁ = λ₀₂, the optical wavelength selected by the optical wavelength filter becomes λ₀ ± Δλ_{T1} (= λ₀ ± Δλ_{T2}) notwithstanding the control of Δλ_{T1} and Δλ_{T2}.

However, when the first period Λ₀₁ differs from the second period Λ₀₂, that is, λ₀₁ ≠ λ₀₂, the optical wavelength can be varied by controlling Δλ_{T1} and Δλ_{T2}, as is clear from Fig. 8.

When λ₀₁ + Δλ_{T1} = λ₀₂ + Δλ_{T2}, then λ₀₁ - Δλ_{T1} ≠ λ₀₂ - Δλ_{T2}, or when λ₀₁ - Δλ_{T1} = λ₀₂ - Δλ_{T2}, then λ₀₁ + Δλ_{T1} ≠ λ₀₂ + Δλ_{T2}.

When λ₀₁ + Δλ_{T1} = λ₀₂ + Δλ_{T2}, then λ₀₁ - Δλ_{T1} ≠ λ₀₂ - Δλ_{T2} so that the optical wavelength selected by the optical wavelength filter becomes one single wavelength, that is, λ₀₁ + Δλ_{T1} (= λ₀₂ + Δλ_{T2}).

When λ₀₁ - Δλ_{T1} = λ₀₂ - Δλ_{T2}, then λ₀₁ + Δλ_{T1} ≠ λ₀₂ + Δλ_{T2} so that the optical wavelength selected by the optical wavelength filter becomes one single wavelength, that is, λ₀₁ - Δλ_{T1} ( = λ₀₂ - Δλ_{T2}).

According to the embodiment, the channel number of the optical wavelength filter of the third embodiment is twice that of the first embodiment.

This embodiment generates the first and the second distributions of electric field e1(z) and e2(z) concurrently and adjusts periods of both the first and the second voltages Vn and Un in such a manner that either of the two conversion wavelengths of filter portion I coincides with either of the two conversion wavelengths of the second mode converter 60 in the filter portion II, whereby a light with a desired wavelength can be selected from polychromatic light.

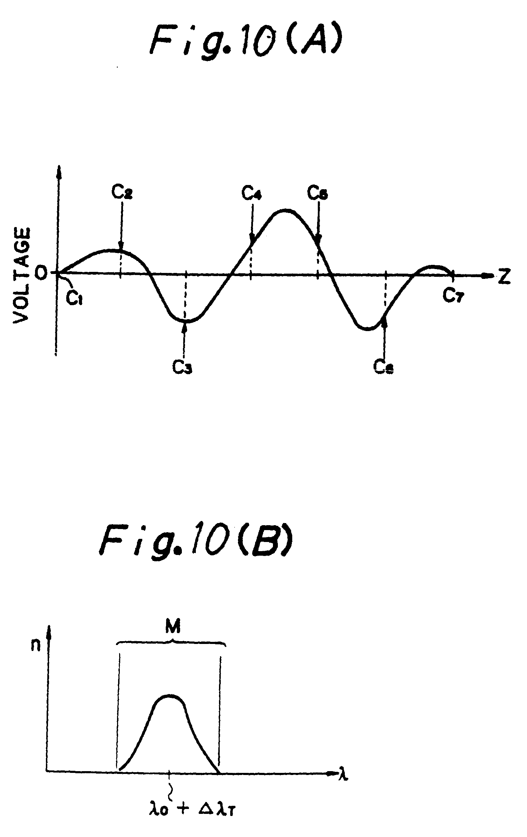

The shape of the pass-band of a filter according to the present invention can be improved by setting the voltages, applied to the control electrodes 28, such that the mode conversion efficiency at the ends of the filter is less than that at the centre of the filter. This will be now be explained with reference to Figs. 8 and 10.

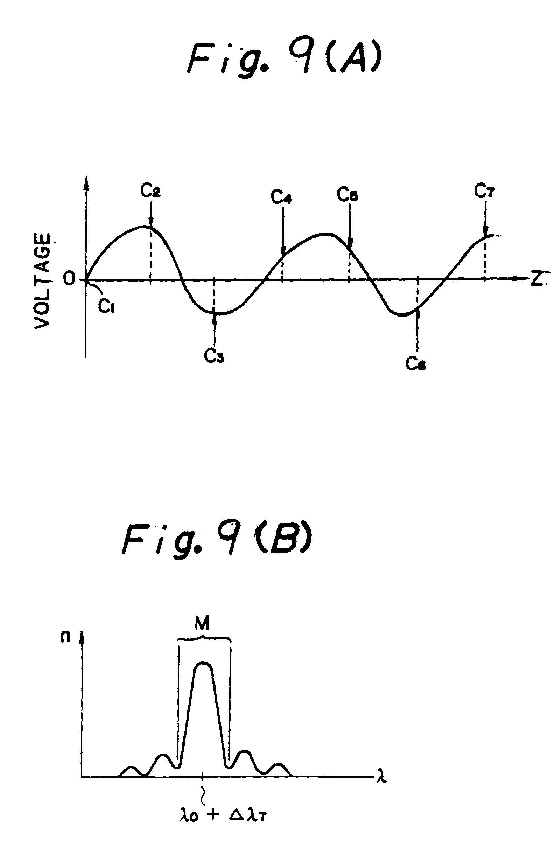

Fig. 9 (A) illustrates a voltage Vm distribution applied to a filter according to the first embodiment of the present invention. The vertical axis is applied voltage (Vm) and the horizontal axis is displacement along the waveguide path (z).

Fig. 9 (B) is a plot of conversion efficiency (η) against wavelength (λ) where Vm is as shown in Fig. 9 (A). M indicates the filters pass-band.

Figs. 10 (A) and (B) are respectively plots of applied control voltage against displacement along the waveguide path and efficiency against wavelength in the case where the applied voltage Vm is arranged such that the mode conversion efficiency at the ends of the filter is less than that at the centre of the filter.

As illustrated in Fig. 10 (A), when the voltage Vm is applied in such a manner that TM to TE mode-conversion efficiency of mode conversion at the end portions C1, C2, C6 and C7 is smaller than that at the centre portion C3, C4 and C5, the shape of the filter's pass-band approaches the desired rectangular form.

The embodiments according to the present invention enable filters to be constructed with bandwidths of approximately 1 nm and which are tunable over a range greater than 100 nm.

In the foregoing description, the spacing between adjacent electrode pairs R is equal to G. However, this is not essential and R could be set to an integer multiple of G.

## Claims

1. An optical wavelength selection filter, comprising a waveguide (26) formed on a substrate (32); an input polarizer (20) at an input to the waveguide (26), having a first polarization plane; an output polarizer (24) at an output of the waveguide (26), having a second different polarization plane; and a mode converter (22) disposed along the waveguide (26) between the polarizers (20,24) for converting radiation from a first mode polarized in said first plane to a second mode polarized in said second plane, the converter (22) comprising a multi-fingered reference electrode means (36) interdigitated with a plurality of finger-type control electrode means (28), **characterised by** controllable voltage generator means for applying voltage pattern (A,B) to the control electrode means (28), wherein the voltage pattern (A,B) is or approximates a spatial sine wave and the voltage generator means is controllable to vary the period of said sine wave.

2. A filter according to claim 1, wherein the spacing between the finger elements (28,30) of said electrode means is constant along the waveguide (26) between the polarizers (20,24).

3. A filter according to claim 1 or 2, wherein groups of neigbouring control electrode means (28) are electrically coupled together so as to define a plurality of mode converter sections (22) distributed along the waveguide (26).

4. A filter according the claim 3, wherein the periodicity of the finger elements (28,30) of the reference and control electrode means (36,34) is constant within each mode converter section (22).

5. A filter according to claim 4, wherein the lengths of the mode converter sections (22) increase or decrease towards the output polarizer (24).

6. A optical wavelength selection filter comprising two cascaded filters according to any preceding claim, wherein the output polarizer (58) of one filter acts as the input polarizer for the succeeding filter.

7. A method of tuning an optical wavelength selection filter which comprises a waveguide (26) formed on a substrate (32); an input polarizer (20) at an input to the waveguide (26), having a first polarization plane; an output polarizer (24) at an output of the waveguide (26), having a second different polarization plane; and a mode converter (22) disposed along the waveguide (26) between the polarizers (20,24) for converting radiation from a first mode polarized in said first plane to a second mode polarized in said second plane, the converter (22) comprising a multi-fingered reference electrode means (36) interdigitated with a plurality of finger-like control electrode means (34), the method comprising the steps of:
(a) applying a first voltage pattern (A,B), which is or approximates a spatial sine wave having a first period, to the control electrode means (34), and
(b) replacing the first voltage pattern (A,B) with a second voltage pattern (A,B), which is or approximates a spatial sine wave having a second period, to the control electrode means (34), to thereby tune the filter.

## Patentansprüche

1. Selektionsfilter für Lichtwellenlängen, mit einem auf einem Substrat (32) gebildeten Wellenleiter (26), einem Eingangspolarisator (20) an einem Eingang in den Wellenleiter (26), der eine erste Polarisationsebene aufweist, einem Ausgangspolarisator (24) an einem Ausgang des Wellenleiters (26), der eine zweite, andere Polarisationsebene aufweist, und einem Modenkonverter (22), der den Wellenleiter (26) entlang zwischen den Polarisatoren (20, 24) angeordnet ist, zur Umwandlung von Strahlung aus einem ersten, in der ersten Ebene polarisierten Mode in einen zweiten, in der zweiten Ebene polarisierten Mode, wobei der Konverter (22) eine mehrfingrige Bezugselektrodeneinrichtung (36) aufweist, die kammartig mit einer Vielzahl von fingerartigen Steuerelektrodeneinrichtungen (28) ineinandergreift, **gekennzeichnet durch** eine steuerbare Spannungsgeneratoreinrichtung zum Anlegen eines Spannungsmusters (A, B) an die Steuerelektrodeneinrichtungen (28), wobei das Spannungsmuster (A, B) eine räumliche Sinuswelle oder daran angenähert ist und wobei die Spannungsgeneratoreinrichtung steuerbar ist, um die Periode der Sinuswelle zu verändern.

2. Filter gemäß Anspruch 1, wobei der Abstand zwischen den Fingerelementen (28, 30) der Elektrodeneinrichtungen den Wellenleiter (26) entlang zwischen den Polarisatoren (20, 24) konstant ist.

3. Filter gemäß Anspruch 1 oder 2, wobei Gruppen von benachbarten Steuerelektrodeneinrichtungen (28) elektrisch zusammengekoppelt sind, um eine Vielzahl von Modenkonverterteilen (22) zu bilden, die den Wellenleiter (26) entlang verteilt sind.

4. Filter gemäß Anspruch 3, wobei die Periodizität der Fingerelemente (28, 30) der Bezugs- und Steuerelektrodeneinrichtungen (36, 34) innerhalb jedes Modenkonverterteils (22) konstant ist.

5. Filter gemäß Anspruch 4, wobei die Längen der Modenkonverterteile (22) in Richtung auf den Ausgangspolarisator (24) größer oder kleiner werden.

6. Selektionsfilter für Lichtwellenlängen mit zwei Kaskaden-Filtern gemäß einem der vorhergehenden Ansprüche, wobei der Ausgangspolarisator (58) eines der Filter als der Eingangspolarisator für das nachfolgende Filter wirkt.

7. Verfahren zur Abstimmung eines Selektionsfilters für Lichtwellenlängen, das einen auf einem Substrat (32) gebildeten Wellenleiter (26); einen Eingangspolarisator (20) an einem Eingang in den Wellenleiter (26), der eine erste Polarisationsebene aufweist, einen Ausgangspolarisator (24) an einem Ausgang des Wellenleiters (26), der eine zweite, andere Polarisationsebene aufweist, und einen Modenkonverter (22) aufweist, der den Wellenleiter (26) entlang zwischen den Polarisatoren (20, 24) angeordnet ist, zur Umwandlung von Strahlung aus einem ersten, in der ersten Ebene polarisierten Mode in einen zweiten, in der zweiten Ebene polarisierten Mode, wobei der Konverter (22) eine mehrfingrige Bezugselektrodeneinrichtung (36) aufweist, die kammartig mit einer Vielzahl von fingerartigen Steuerelektrodeneinrichtungen (34) ineinandergreift, dadurch gekennzeichnet, daß das Verfahren folgende Verfahrensschritte aufweist:
(a) Anlegen eines ersten Spannungsmusters (A, B), das eine räumliche Sinuswelle mit einer ersten Periode oder daran angenähert ist, an die Steuerelektrodeneinrichtung (34), und
(b) Ersetzen des ersten Spannungsmusters (A, B) durch ein zweites Spannungsmuster (A, B), das eine räumliche Sinuswelle mit einer zweiten Periode oder daran angenähert ist, an der Steuerelektrodeneinrichtung (34), um dadurch das Filter abzustimmen.

## Revendications

1. Filtre de sélection de longueurs d'onde optiques, comprenant un guide d'ondes (26) formé sur un substrat (32); un polariseur d'entrée (20) disposé à une entrée du guide d'ondes (26) et possédant un premier plan de polarisation; un polariseur de sortie (24) situé à une sortie du guide d'ondes (26) et possédant un second plan de polarisation différent; et un convertisseur de mode (22) disposé le long du guide d'ondes (26) entre les polariseurs (20,24) pour convertir le rayonnement depuis un premier mode polarisé dans ledit premier plan en un second mode polarisé dans ledit second plan, le convertisseur (22) comprenant des moyens formant électrodes de référence (36) à doigts multiples, interdigités avec une pluralité de moyens formant électrodes de commande (28) du type formés de doigts, caractérisé par des moyens formant générateur de tension commandable pour appliquer une forme de tension (A,B) aux moyens formant électrodes de commande (28), la forme de tension (A,B) étant ou se rapprochant d'une onde sinusoïdale spatiale et les moyens formant générateur de tension pouvant être commandés de manière à modifier la période de ladite onde sinusoïdale.

2. Filtre selon la revendication 1, dans lequel l'espacement entre les éléments en forme de doigts (28,30) desdits moyens formant électrodes est constant le long du guide d'ondes (26) entre les polariseurs (20,24).

3. Filtre selon la revendication 1 ou 2, dans lequel des groupes de moyens formant électrodes de commande voisins (28) sont couplés électriquement entre eux de manière à définir une pluralité de sections (22) de convertisseur de mode réparties le long du guide d'ondes (26).

4. Filtre selon la revendication 3, dans lequel la périodicité des éléments en forme de doigts (28,30) des moyens formant électrodes de référence et de commande (36,34) est constante dans chaque section (22) du convertisseur de mode.

5. Filtre selon la revendication 4, dnas lequel les longueurs des sections (22) du convertisseur de mode augmentent ou diminuent en direction du polariseur de sortie (24).

6. Filtre de sélection de longueurs d'onde optiques comprenant deux filtres branchés en cascade selon l'une quelconque des revendications précédentes, le polariseur de sortie (58) d'un filtre agissant en tant que polariseur d'entrée pour le filtre suivant.

7. Procédé pour accorder un filtre de sélection de longueurs d'onde optiques, qui comprend un guide d'ondes (26) formé sur un substrat (32); un polariseur d'entrée (20) disposé à une entrée du guide d'ondes (26) et possédant un premier plan de polarisation; un polariseur de sortie (24) situé à une sortie du guide d'ondes (26) et possédant un second plan de polarisation différent; et un convertisseur de mode (22) disposé le long du guide d'ondes (26) entre les polariseurs (20,24) pour convertir le rayonnement depuis un premier mode polarisé dans ledit premier plan en un second mode polarisé dans ledit second plan, le convertisseur (22) comprenant des moyens formant électrodes de référence (36) à doigts multiples, interdigités avec une pluralité de moyens formant électrodes de commande (34) du type formé de doigts, le procédé comprenant les étapes consistant à :
(a) appliquer une première forme de tension (A,B) qui est ou se rapproche d'une onde sinusoïdale spatiale possédant une première période, aux moyens formant électrodes de commande (34), et
(b) remplacer la première forme de tension (A,B) par une seconde forme de tension (A,B), qui est ou se rapproche d'une onde sinusoïdale spatiale possédant une seconde période, aux moyens formant électrodes de commande (34), pour accorder ainsi le filtre.
